# FASCICULE DE BREVET EUROPEEN

(11) **EP 0 363 294 B1**
(45) Date de publication et mention de la délivrance du brevet: **18.08.1993**
(21) Numéro de dépôt: 89440102.5
(22) Date de dépôt: 02.10.1989
(51) Int. Cl.: G01B 7/00, G01B 11/00

(54) **Appareil de détermination des caractéristiques d'ensembles de points appartenantà un cylindre rigide en rotation autour de son axe**
Vorrichtung zur Festlegung der Merkmale von Punktmengen, die zu einem um seine Achse rotierenden festen Zylinder gehören
Apparatus for the determination of the characteristics of sets of points belonging to a rigid cylinder in rotation about its axis

(30) Priorité: 03.10.1988 FR 8813067
(43) Date de publication de la demande: 11.04.1990
(73) Titulaire: Staffelbach, Christian, F-67000 Strasbourg (FR); Mawhin, Bernard, F-67000 Strasbourg (FR)
(72) Inventeur: Staffelbach, Christian, F-67000 Strasbourg (FR); Mawhin, Bernard, F-67000 Strasbourg (FR)
(74) Mandataire: Nuss, Pierre

(56) Documents cités:
- EP-A- 0 264 233
- DE-A- 2 747 828
- GB-A- 2 158 675
- US-A- 4 464 839
- PATENT ABSTRACTS OF JAPAN, vol. 6, no. 84 (P-117)(962), 22 mai 1982 ; & JP-A-57 023802 (IIJIMA SEIMITSU KOGYO KK), 08.02.1982

## Description

La présente invention concerne un appareil pour la détermination des caractéristiques d'ensembles de points appartenant à un échantillon cylindrique rigide en rotation autour de son axe, notamment une carotte de sondage consistant en un cylindre de roche.

La saisie sur des carottes de données géométriques s'effectue traditionnellement de deux façons.

Une première méthode consiste en un relevé manuel sur films transparents des informations géologigues visibles sur la périphérie de la carotte, la mesure des tracés obtenus étant réalisée à l'aide d'abagues. Ce relevé manuel de données géométriques peut être remplacé par un système gui réalise par photographie la projection plane de l'image de la carotte cylindrique.

Cette méthode nécessite donc la mise à plat de toutes les caractéristiques géométriques des objets géologigues observés et entraîne, par conséquent, la perte de l'information tridimensionnelle.

Une deuxième méthode connue d'acquisition des plans et des lignes consiste en la mesure manuelle directe sur carotte à l'aide d'une boussole ou d'un rapporteur.

Néanmoins, cette dernière méthode ne permet pas de relever les autres informations, et nécessite des manipulations nombreuses et délicates, augmentant le risque de détérioration de la carotte.

Ces deux méthodes actuelles précitées obligent, par ailleurs, le manipulateur, dans une deuxième étape, à recalculer l'orientation absolue des éléments structuraux relevés par référence à une donnée externe géographiquement calée.

Par le document US-A-4 464 839, on connaît, en outre, un quantificateur tridimensionnel mécanique permettant de numériser la surface extérieure d'un corps solide et comportant, d'une part, une sonde mécanique déplaçable dans un plan horizontal selon deux directions orthogonales au moyen de deux ensembles chariot-rails correspondant à déplacement manuel et, d'autre part, un bras support recevant le corps solide, solidaire d'un mécanisme manuel d'entraînement en rotation.

Néanmoins, ce quantificateur, du fait de son actionnement entièrement manuel, entraîne des manipulations fastidieuses pour l'utilisateur, en vue de la rotation du corps à analyser et du déplacement de la sonde pour chaque point à relever, limitant sensiblement la vitesse d'acquisition des informations.

En outre, les coordonnées relevées sont entachées d'incertitudes de mesures cumulatives, dues à l'actionnement exclusivement manuel dudit quantificateur, à la nature mécanique des relevés et aux différentes déformations des éléments supports dudit corps à analyser.

Par ailleurs, ce quantificateur ne peut relever les coordonnées de points du corps solide à analyser que dans une région délimitée de ce dernier et nécessite donc plusieurs opérations de mesurage, entrecoupées de manipulations dudit corps à analyser, entraînant des risques d'erreurs de mesurage et de détérioration dudit corps solide.

La présente invention a pour but de pallier les différents inconvénients précités et de concevoir un appareil pour la détermination des caractéristiques d'ensembles de points d'un échantillon cylindrique, permettant, en une seule opération, sans manipulation intermédiaire de l'échantillon, d'accéder à tout point de la surface dudit échantillon et de supporter de manière uniforme et avec une très grande stabilité lesdits échantillons, même lorsque ceux-ci présentent un poids élevé ou des dimensions importantes.

En outre, ledit appareil devra permettre d'obtenir une très grande précision de mesure.

A cet effet, l'invention a pour objet un appareil du type précité, se présentant sous la forme d'un périphérique d'ordinateur, portable et démontable, et principalement constitué par la combinaison de plusieurs dispositifs spécifiques, à savoir, d'une part, un dispositif mécanique composé essentiellement d'un boîtier contenant deux rouleaux cylindriques parallèles de même diamètre, dont les axes sont montés fixes dans ledit boîtier avec entrainement en rotation par un système électromécanique, permettant ainsi le support uniforme et précis et la rotation autour de son axe d'un échantillon cylindrique rigide, ledit boîtier comportant, en outre, sur l'une de ses parois longitudinales, une plaquette graduée rectangulaire en vue de la définition de l'origine de repérage, d'autre part, un dispositif de conversion analogique-numérique, commandant et contrôlant la rotation dudit échantillon et un dispositif de saisie numérique des coordonnées tridimensionnelles de points appartenant audit échantillon et, enfin, un dispositif de transmission, gérant les communications entre l'ordinateur, d'une part, et les dispositifs de conversion analogique-numérique et de saisie numérique, d'autre part.

D'autres caractéristiques et avantages de l'invention ainsi qu'une forme d'exécution, donnée à titre d'exemple non limitatif, apparaîtront ci-après à l'aide de la description qui va suivre faite en regard des dessins annexés dans lesquels :

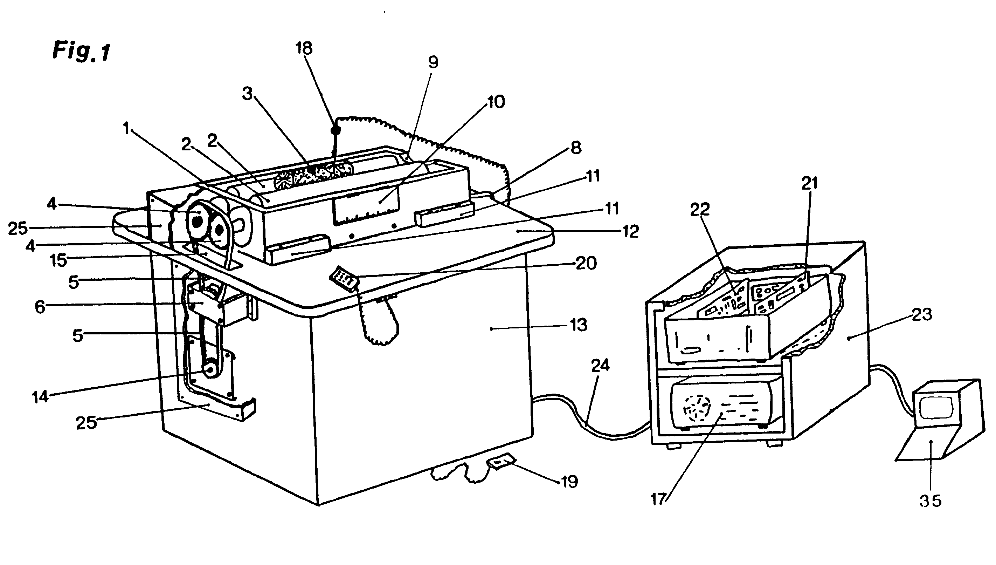

- la fig 1 est une vue générale d'une forme de réalisation préférentielle de l'appareil selon l'invention;

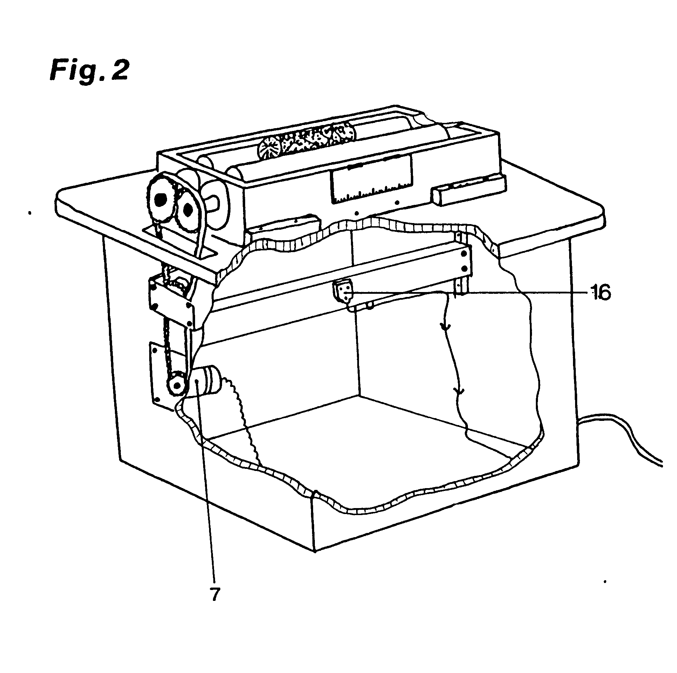

- la fig 2 est une vue en éclaté du bâti de l'appareil représenté sur la fig 1, et,
- la fig 3 est un organigramme illustrant les étapes intervenant dans le déroulement du procédé mis en oeuvre par l'appareil.

L'appareil suivant l'invention sera décrit, dans ce qui va suivre, en se référant à la détermination des caractéristiques de structures géométriques sur des échantillons cylindriques de roche.

L'appareil constitue un périphérique portable d'ordinateur combinant les quatre dispositifs suivants: un dispositif mécanique permettant la rotation de l'échantillon; un dispositif de conversion analogique-numérique permettant le contrôle de la rotation de l'échantillon; un dispositif de saisie numérique permettant la mesure des coordonnées tridimensionnelles des points appartenant à cet échantillon et un dispositif de transmission qui gère les communications entre un ordinateur d'une part et les dispositifs de saisie numérique et analogique-numérique d'autre part.

Selon une caractéristique de l'invention, le dispositif mécanique comprend un boîtier rectangulaire(1), non fermé sur la face supérieure, ce boîtier supporte deux rouleaux(2) cylindriques parallèles de même diamètre sur lesquels sont disposés les échantillons(3) rigides cylindriques 35 à étudier. A l'extrémité de ces rouleaux, dont les axes de rotation sont fixes par rapport au boîtier, sont fixées des roues dentées(4) qui sont reliées par des courroies crantées(5) et par l'intermédiaire d'un réducteur(6) à un système électro-mécanique(7) déterminant leur rotation.

L'espacement des rouleaux est calculé de façon à permettre l'étude de cylindres d'un diamètre de l'ordre de 3cm à 25cm. Les rouleaux présentent une surface antidérapante.

Le fond du boîtier(1) est incliné de façon à permettre un écoulement de liquide vers un conduit d'évacuation(8).

Pour permettre l'étude d'échantillons cylindriques de longueur supérieure à celle du boîtier(1), des entailles sont pratiquées dans une ou les deux faces latérales(9).

Une plaquette rectangulaire(10) en matière rigide, graduée et transparente et servant de repère linéaire est articulée sur l'une des parois de la longueur du boîtier(1) de façon à pouvoir venir en contact avec la périphérie de l'échantillon cylindrique quel que soit le diamètre de ce dernier.

Le boîtier(1) contenant les rouleaux est fixé par un système de fixation (11) le rendant amovible sur un plateau horizontal(12) formant le couvercle d'un bâti(13).

Par l'intermédiaire des courroies crantées(5), des roues dentées(4) ainsi que du réducteur(6), le système électromécanique(7), dont l'axe porte également une roue dentée(14) extérieure au bâti, entraîne les deux rouleaux(2) qui tournent simultanément à la même vitesse et dans le même sens pour permettre la vision de toute la surface de l'échantillon cylindrique.

Le plateau(12) du bâti présente une découpe rectangulaire (15) qui permet le passage des courroies.

Le dispositif de saisie numérique est constitué par un digitaliseur tridimensionnel servant à la saisie et comprenant une source(16) émettant un champ électromagnétique, un microprocesseur et ses circuits associés(17), un stylet(18) captant l'émission et une pédale de saisie(19). Sur le bâti(13) sont fixés, l'ensemble du dispositif mécanique(1,2, 4 à 10 et 14) et la source(16) du dispositif de saisie numérique.

Le dispositif de saisie numérique comprend également un clavier portable(20).

De préférence le dispositif de saisie numérique est constitué par un digitaliseur tridimensionnel du type commercialisé par la société "Mac Donnell Douglas".

Le dispositif de conversion analogique-numérique comporte un contrôleur éléctronique programmable et ses circuits associés(21) qui positionne le dispositif mécanique.

Le dispositif de saisie numérique et le dispositif de de conversion analogique-numérique sont connectés à un ordinateur(35) par l'intermédiaire d'un dispositif(22) de transmis-sion commutable par programme en parallèle ou en série, et permettant la gestion des données propres du digitaliseur et du contrôleur. Un logiciel régit le fonctionnement des divers éléments du dispositif.

Le microprocesseur et ses circuits associés(17) constituant le système de commande du dispositif de saisie numérique, le dispositif de conversion analogique-numérique, et le dispositif de transmission sont regroupés et situés dans une enceinte indépendante(23). Les connexions entre les appareillages situés dans cette enceinte et ceux fixés sur le bâti(13) sont assurés par l'intermédiaire d'un câble(24) unique, blindé.

Des carters(25) recouvrent les parties mécaniques d'entraînement des rouleaux pour les protéger des projections.

Le boîtier(1) contenant les rouleaux, les rouleaux(2), le système de fixation(11), les roues dentées(4,14), les courroies(5), le réducteur(6), la plaquette(10), les carters(25), le conduit d'évacuation(8), le bâti(13) et l'enceinte indépendante(23) sont constitués de matériaux amagnétiques, rigides et résistant à l'humidité.

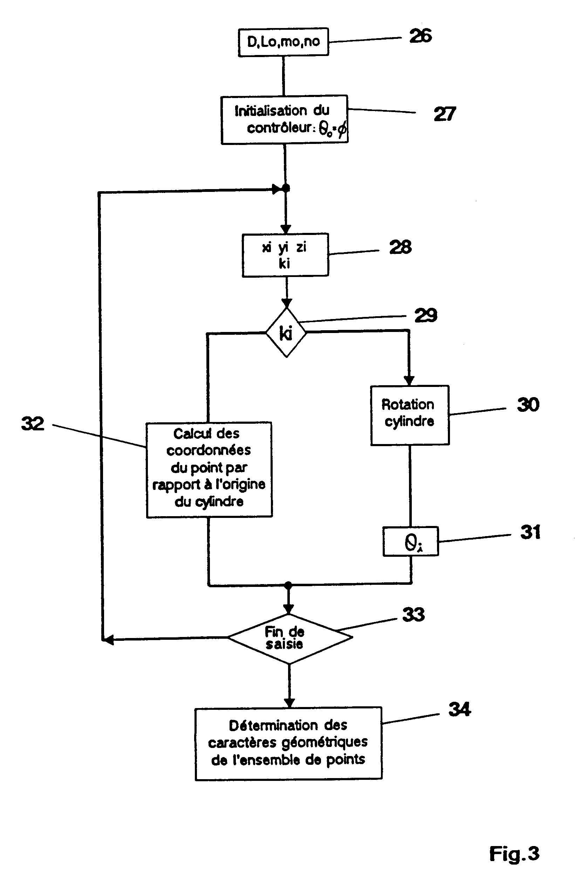

Le procédé mis en oeuvre par l'appareil conforme à l'invention constitue un ensemble de procédures dont l'exécution se réalise selon les neuf étapes numérotées de 26 à 34 de l'organigramme de la fig3.

La digitalisation sur la périphérie de l'échantillon 25 cylindrique d'une droite (Lo,mo,no) parallèle à son axe et la connaissance du diamètre (D) du cylindre, permettent l'affectation au cylindre d'un repère orthonormé déterminé d'une part par une position de sa génératrice et d'autre part par la position de son axe (étape 26). L'initialisation du contrôleur responsable du positionnement du dispositif mécanique assurant la rotation (étape 27) termine ce premier stade.

Dans un deuxième stade, on procède à la saisie simultanée d'une part du caractère de la touche du clavier portable(20) sur laquelle on appuie (étape 28) et d'autre part des coordonnées d'un point situé à l'extrémité du stylet(18) par référence à un repère orthonormé associé à la source(16) du dispositif de saisie numérique.

Le caractère de la touche choisie (étape 29) détermine l'exécution conditionnelle des étapes 30 et 31 d'une part, de l'étape 32 d'autre part.
Les étapes 30 et 31 correspondent respectivement au déclanchement de la rotation (étape 30) et à la détermination de la valeur (Oi) de cette rotation (étape 31).

La détermination des nouvelles coordonnées des points digitalisés s'effectue par transformation de coordonnées, du repère associé à la source électromagnétique au repère associé au cylindre en rotation (étape 32).

Après évaluation (étape 33) de la condition d'arrêt de saisie de l'ensemble de points du cylindre (étapes 28 à 32), les caractéristiques géométriques de l'ensemble de points sont déterminées par calcul (étape 34).

Le fonctionnement de l'appareil selon l'invention est le suivant:

L'échantillon cylindrique(3) à traiter est disposé sur les rouleaux(2).

L'opérateur digitalise avec le stylet(18) une position de la génératrice déterminée à l'aide de la plaquette transparente (10) dont le bord supérieur est mis en contact avec l'échantillon et il fournit également à l'ordinateur(35) le diamètre de l'échantillon cylindrique, la saisie s'effectuant par l'intermédiaire du clavier portable(20) ou de la pédale(19).

Puis intervient la phase de digitalisation d'ensembles de points. Selon la valeur du caractère de la touche du clavier portable sur laquelle il appuie, l'opérateur indique au système s'il désire effectuer une rotation de l'échantillon ou bien effectuer la saisie d'un point sur cet échantillon. Cette saisie se réalise en posant la pointe du stylet (18) sur le point que l'on veut digitaliser et à valider la mesure par l'intermédiaire du clavier portable(20) ou de la pédale(19).

Cette opération est répétée le nombre de fois nécessaires au relevé complet de la structure étudiée.

Les données ainsi numérisées, sont ensuite traitées par l'ordinateur afin de calculer les caractéristiques géométriques de la structure.

Bien évidemment, le système comprend une circuiterie électrique qui permet de réaliser les différentes séquences et les sécurités nécessaires, circuiterie qui n'a pas été décrite pour être connue de l'homme de l'art.

La commande générale du circuit d'alimentation, quant à elle, se trouve située dans l'enceinte indépendante(23).

## Revendications

1. Appareil pour la détermination des caractéristiques d'ensembles de points appartenant à un échantillon cylindrique rigide, caractérisé en ce qu'il se présente sous la forme d'un périphérique d'ordinateur (35), portable et démontable, et en ce qu'il est principalement constitué par la combinaison de plusieurs dispositifs spécifiques, à savoir, d'une part, un dispositif mécanique composé essentiellement d'un boîtier (1) contenant deux rouleaux (2) cylindriques parallèles de même diamètre, dont les axes sont montés fixes dans le boîtier (1) avec entraînement en rotation par un système électromécanique (7), permettant ainsi le support uniforme et précis et la rotation autour de son axe d'un échantillon (3) cylindrique rigide, ledit boîtier (1) comportant, en outre, sur l'une de ses parois longitudinales, une plaquette graduée rectangulaire (10) en vue de la définition de l'origine de repérage, d'autre part, un dispositif (21) de conversion analogique-numérique, commandant et contrôlant la rotation dudit échantillon (3) et un dispositif de saisie numérique des coordonnées tridimensionnelles de points appartenant audit échantillon (3) et, enfin, un dispositif de transmission (22), gérant les communications entre l'ordinateur (35), d'une part, et les dispositifs de conversion analogique - numérique (21) et de saisie numérique, d'autre part.

2. Appareil selon la revendication 1, caractérisé en ce que les deux rouleaux (2) présentent des surfaces antidérapantes, et en ce que des roues dentées (4 et 14) sont fixées à l'une des extrémités des axes des rouleaux (2), en étant reliées par des courroies crantées (5) et par l'intermédiaire d'un réducteur (6) au système électromécanique (7) assurant la rotation desdits rouleaux (2).

3. Appareil selon la revendication 2, caractérisé en ce que la plaquette graduée rectangulaire (10) consiste en une matière transparente rigide et est montée de manière articulée sur l'une des parois longitudinales du boîtier (1), de façon à pouvoir venir en contact avec la périphérie de l'échantillon quel que soit le diamètre de ce dernier.

4. Appareil selon l'une quelconque des revendications 2 et 3, caractérisé en ce que le boîtier (1) présente une entaille (9) sur l'une ou les deux faces latérales, afin de permettre la mise en place sur les rouleaux (2) d'un échantillon cylindrique (3) de longueur supérieure à celle du boîtier (1).

5. Appareil selon l'une quelconque des revendications 2 à 4, caractérisé en ce que le fond du boîtier (1), supportant les rouleaux (2), est incliné vers un conduit d'évacuation (8) pour les liquides.

6. Appareil selon l'une quelconque des revendications 1 à 5, caractérisé en ce que le dispositif de saisie numérique se présente sous la forme d'un digitaliseur tridimensionnel, comprenant une source (16) émettant un champ électromagnétique englobant l'échantillon (3), un microprocesseur et des circuits associés (17), un stylet (18) captant l'émission de ladite source (16) et un clavier portable (20) et/ou une pédale (19), permettant de commander la saisie de points sur l'échantillon (3).

7. Appareil selon la revendication 6, caractérisé en ce que le clavier portable (20) permet à l'utilisateur d'effectuer les commandes de rotation et de saisie.

8. Appareil selon l'une quelconque des revendications 1 à 7, caractérisé en ce que le boîtier (1), supportant les rouleaux (2), est monté, au moyen d'un système de fixation (11) amovible, sur un plateau horizontal (12) formant le couvercle d'un bâti (13).

9. Appareil selon la revendication 8, caractérisé en ce que la source (16) du dispositif de saisie numérique, disposée sous le boîtier (1), et le système électromécanique (7) sont fixés sur le bâti (13), ce dernier, ainsi que le boîtier (1), étant réalisés en des matériaux amagnétigues, rigides et résistant à l'humidité.

10. Appareil selon la revendication 9, caractérisé en ce que le microprocesseur et ses circuits associés (17), le dispositif de conversion analogique - numérique (21), le dispositif de transmission (22) et la commande générale du circuit d'alimentation de l'appareil sont disposés dans une enceinte (23) indépendante amagnétigue, les connexions entre la source (16), le stylet (18), le clavier (20), la pédale (19) et le système électromécanique (7), d'une part, et les dispositifs (17, 21, 22) disposés dans ladite enceinte (23), d'autre part, sont réalisés par l'intermédiaire d'un câble unique blindé (24).

11. Appareil selon l'une quelconque des revendications 2 à 10, caractérisé en ce que l'espacement des rouleaux (2) est déterminé de façon à permettre l'étude d'échantillons cylindriques (3) dont le diamètre peut varier de quelques centimètres à quelques décimètres.

12. Appareil selon l'une quelconque des revendications 1 à 11, caractérisé en ce que l'échantillon (3) est une carotte provenant d'un trou foré.

## Patentansprüche

1. Vorrichtung zur Bestimmung der Merkmale von Punktmengen, die zu einem starren, zylindrischen Probekörper gehören, dadurch gekennzeichnet, daß sie in der Form eines portablen und demontierbaren Computerperipheriegeräts erscheint und dadurch, daß sie im wesentlichen durch die Kombination von mehreren spezifischen Einrichtungen gebildet wird, nämlich einerseits einer mechanischen Einrichtung, die im wesentlichen von einem Gehäuse (1) gebildet wird, das zwei zylindrische, parallele Rollen (2) mit gleichem Durchmesser enthält, deren Achsen ortsfest mit Rotationsantrieb durch ein elektromechanisches System (7) im Gehäuse (1) montiert sind, was so die einheitliche und genaue Unterstützung und die Rotation eines zylindrischen Probekörpers (3) um seine Achse ermöglicht, wobei das besagte Gehäuse (1) unter anderem auf einer seiner Längswände eine kleine rechteckige, mit einer Skala versehene Platte (10) im Hinblick auf die Definition des Ursprungs der Maßbestimmung aufweist, und andererseits einer Analog-Digital-Wandlereinrichtung (21), die die Rotation des besagten Probekörpers (3) steuert und regelt und einer digitalen Erfassungseinrichtung der dreidimensionalen Koordinaten der zum Probekörper (3) gehörenden Punkte, und schließlich einer Übertragungseinrichtung (22), die die Kommunikation zwischen einerseits dem Computer (35) und andererseits der Analog-Digital-Wandler- und der Erfassungseinrichtung lenkt.

2. Vorrichtung nach Anspruch (1),
dadurch gekennzeichnet, daß die beiden Rollen (2) rutschfeste Oberflächen zeigen und dadurch, daß Zahnräder (4) und (14) an einem der Achsenden der Rollen (2) befestigt sind, wobei diese durch Zahnriemen (5) und mittels eines Getriebes (6) mit dem elektromechanischen System (7) verbunden sind, das für die Rotation der besagten Rollen (2) sorgt.

3. Vorrichtung nach Anspruch (2),
dadurch gekennzeichnet, daß die kleine rechteckige, mit einer Skala versehenen Platte (10̸) aus einem durchsichtigen, starren Material besteht und gelenkig so auf einer der Längswände des Gehäuses (1) montiert ist, daß sie mit dem Umfang des Probekörpers in Kontakt treten kann, was auch immer der Durchmesser dieses letzteren sein möge.

4. Vorrichtung gemäß einem der Ansprüche (2) und (3),
dadurch gekennzeichnet, daß das Gehäuse (1) einen Einschnitt (9) auf der einen oder beiden Seitenflächen zeigt, um die Aufstellung eines zylindrischen Probekörpers (3) mit einer größeren Länge als der des Gehäuses (1) auf die Rollen (2) zu ermöglichen.

5. Vorrichtung gemäß einem der Ansprüche (2) bis (4),
dadurch gekennzeichnet, daß der Boden des Gehäuses (1), das die Rollen (2) trägt, gegen eine Abflußleitung (8) für Flüssigkeiten geneigt ist.

6. Vorrichtung gemäß einem der Ansprüche (1) bis (5),
dadurch gekennzeichnet, daß die digitale Erfassungseinrichtung in der Form eines dreidimensionalen Digitalisierers erscheint, der eine Quelle (16), die ein elektromagnetisches Feld ausstrahlt, das den Probekörper (3) umfaßt, einen Microprozessor und damit verbundene Schaltkreise (17), eine Sonde (18), die die Strahlung der besagten Quelle (16) aufnimmt, und eine portable Tastatur (20̸) und/oder einen Fußschalter (19) aufweist, der es ermöglicht, die Erfassung von Punkten auf dem Probekörper (3) zu steuern.

7. Vorrichtung nach Anspruch (6),
dadurch gekennzeichnet, daß es die portable Tastatur (20̸) dem Benutzer ermöglicht, die Rotations- und Erfassungssteuerungen zu betätigen.

8. Vorrichtung nach einem der Ansprüche (1) bis (7),
dadurch gekennzeichnet, daß das Gehäuse (1), das die Rollen (2) trägt, mit Hilfe eines abnehmbaren Befestigungssystems (11) auf einer horizontalen Platte (12) montiert ist, das die Abdeckung eines Untergestells (13) bildet.

9. Vorrichtung nach Anspruch (8),
dadurch gekennzeichnet, daß die Quelle (16) der digitalen Erfassungseinrichtung, die unter dem Gehäuse (1) angeordnet ist, und das elektromechanische System (7) auf dem Untergestell (13) befestigt sind, wobei das letztere so wie das Gehäuse (1) aus antimagnetischem, starren und feuchtebeständigen Materialien gefertigt ist.

10. Vorrichtung nach Anspruch (9),
dadurch gekennzeichnet, daß der Microprozessor und seine verbundenen Schaltkreise (17), die Analog-Digital-Wandlereinrichtung (21), die Übertragungseinrichtung (22) und die Hauptsteuerung des Versorgungsschaltkreises in einer unabhängigen, antimagnetischen Zelle (23) angeordnet sind, wobei die Verbindungen zwischen der Quelle (16), der Sonde (18), der Tastatur (20̸), des Fußschalters (19) und dem elektromagnetischen System (7) zum einen und den in besagter Zelle (23) angeordneten Einrichtungen (17, 21, 22) zum anderen mittels eines einheitlich abgeschirmten Kabels (24) ausgeführt sind.

11. Vorrichtung nach einem der Ansprüche (2) bis (10̸),
dadurch gekennzeichnet, daß der Abstand der Rollen (2) so vorbestimmt ist, daß die Untersuchung von zylindrischen Probekörpern (3) ermöglicht wird, deren Durchmesser von einigen Zentimetern bis zu einigen Dezimetern variieren kann.

12. Vorrichtung gemäß einem der Ansprüche (1) bis (11),
dadurch gekennzeichnet, daß der Probekörper (3) ein Bohrkern ist, der aus einem Bohrloches stammt.

## Claims

1. Apparatus for determining the characteristics of sets of points belonging to a rigid cylindrical sample, characterised in that it has the form of a portable, detachable computer peripheral (35) and in that it consists mainly of the combination of several specific devices, that is on the one hand a mechanical device composed essentially of a casing (1) containing two parallel cylindrical rollers (2) of equal diameter of which the axles are stationarily mounted in the casing (1) and are set into rotation by an electromechanical system (7) thus allowing uniform and precise support and rotation round its axis of a rigid cylindrical sample (3), said casing (1) also comprising, on one of its longitudinal walls, a rectangular graduated plate (10) intended to define the identification origin and, on the other hand, an analog-digital converter (21) controlling and monitoring the rotation of said sample (3) and a device for the digital acquisition of the three-dimensional co-ordinates of points belonging to said sample (3) and, finally, a transmitter (22) which manages communication between the computer (35) on the one hand and the analog-digital converters (21) and digital acquisition devices on the other hand.

2. Apparatus according to claim 1, characterised in that the two rollers (2) have non-slip surfaces and in that toothed wheels (4 and 14) are fixed to one of the ends of the axles of the rollers (2) by being connected by synchronous belts (5) and by means of a reduction system (6) to the electromechanical system (7) which sets said rollers (2) into rotation.

3. Apparatus according to claim 2, characterised in that the rectangular graduated plate (10) consists of a rigid transparent material and is mounted in an articulated manner on one of the longitudinal walls of the casing (1) so as to be able to come into contact with the periphery of the sample, whatever the diameter of the sample.

4. Apparatus according to any one of claims 2 and 3, characterised in that the casing (1) has a notch (9) on one or both lateral faces to allow a cylindrical sample (3) having a length greater than that of the casing (1) to be positioned on the rollers (2).

5. Apparatus according to any one of claims 2 to 4, characterised in that the bottom of the casing (1) supporting the rollers (2) is inclined toward a discharge conduit (8) for liquids.

6. Apparatus according to any one of claims 1 to 5, characterised in that the digital acquisition device has the form of a three-dimensional digitalizer comprising a source (16) emitting an electromagnetic field surrounding the sample (3), a microprocessor and associated circuits (17), a stylus (18) picking up the emission of said source (16) and a portable keypad (20) and/or a foot pedal (19) allowing the acquisition of points on the sample to be controlled.

7. Apparatus according to claim 6, characterised in that the portable keypad (20) allows the user to carry out rotation and acquisition instructions.

8. Apparatus according to any one of claims 1 to 7, characterised in that the casing (1) supporting the rollers (2) is mounted, by means of a removable fixing system (11), on a horizontal plate (12) forming the cover of a frame (13).

9. Apparatus according to claim 8, characterised in that the source (16) of the digital acquisition device arranged below the casing (1) and the electromechanical system (7) are fixed on the frame (13), the frame (13) as well as the casing (1) being produced from non-magnetic materials which are rigid and resistant to moisture.

10. Apparatus according to claim 9, characterised in that the microprocessor and its associated circuits (17), the analog-digital converter (21), the transmitter (22) and the general control of the supply circuit for the apparatus are arranged in an independent non-magnetic chamber (23), the connections between the source (16), the stylus (18), the keypad (20), the foot pedal (19) and the electromechanical system (7) on the one hand and the devices (17, 21, 22) arranged in said chamber (23) on the other hand being produced by means of a single shielded cable (24).

11. Apparatus according to any one of claims 2 to 10, characterised in that the spacing of the rollers (2) is determined so as to allow the study of cylindrical samples (3) of which the diameter may vary from several centimetres to several decimetres.

12. Apparatus according to any one of claims 1 to 11, characterised in that the sample (3) is a core originating from a drilled hole.
